Europäisches Patentamt

European Patent Office

Office européen des brevets

(19)

(11) Veröffentlichungsnummer: **0 103 270**
**B1**

(12) **EUROPÄISCHE PATENTSCHRIFT**

(45) Veröffentlichungstag der Patentschrift:
17.09.86

(51) Int. Cl.⁴: **B 23 B 31/10**, B 25 B 1/24

(21) Anmeldenummer: **83108839.8**

(22) Anmeldetag: **07.09.83**

(54) **Spannbacke für Aufspannvorrichtungen.**

(30) Priorität: **13.09.82 DE 3233915**

(43) Veröffentlichungstag der Anmeldung:
**21.03.84 Patentblatt 84/12**

(45) Bekanntmachung des Hinweises auf die Patenterteilung:
**17.09.86 Patentblatt 86/38**

(84) Benannte Vertragsstaaten:
**CH DE FR GB LI SE**

(56) Entgegenhaltungen:
**EP - A - 0 036 988**
**DE - B - 1 049 193**
**FR - A - 2 187 479**
**US - A - 4 116 453**

(73) Patentinhaber: **Oerlikon-Boehringer GmbH, Stuttgarter Strasse 50 Postfach 220, D-7320 Göppingen (DE)**

(72) Erfinder: **Rohs, Hans-Günther, Prof., Dr.-Ing., Neuffenstrasse 9, D-7324 Rechberghausen (DE)**

(74) Vertreter: **Vogeser, Werner, Dipl.-Ing. et al, Patentanwälte Hansmann & Vogeser Albert-Rosshaupter-Strasse 65, D-8000 München 70 (DE)**

ACTORUM AG

**Beschreibung**

Die Erfindung betrifft eine Spannbacke entsprechend dem Oberbegriff des Anspruchs 1.

Aus der US-A-4 116 453 ist es bekannt, an einer Spannbacke ein Polster anzuordnen, dass aus einem biegsamen bzw. weichen Material wie Polyurethan besteht und das sich beim Spannen eines Werkstückes dessen Oberfläche anpasst. Ein derartiges Polster hat zwar den Vorteil, dass es Werkstücke gegen Beschädigungen schützt, jedoch ist die aufzubringende Spannkraft durch die Druckfestigkeit des Polstermaterials begrenzt. Diese Druckfestigkeit reicht häufig nicht aus, um die bei der Bearbeitung auftretenden Kräfte aufzunehmen. Man verwendet daher in der Praxis meist Spannbacken, die der Form des zu bearbeitenden Werkstückes angepasst sind. Die Herstellung und Lagerhaltung derartiger Spannbacken ist jedoch aufwendig, da für jedes Werkstück anderer Form oder Abmessung gesonderte Spannbacken hergestellt und ggf. zur späteren Wiederverwendung gelagert werden müssen.

Der Erfindung liegt die Aufgabe zugrunde, die Spannbacke der eingangs genannten Art so auszubilden, dass eine hohe Spannkraft aufgebracht werden kann, ohne dass dadurch Markierungen auf der Werkstückoberfläche entstehen.

Gelöst wird diese Aufgabe gemäss der Erfindung durch die im kennzeichnenden Teil des Anspruchs 1 angegebenen Merkmale. Zweckmässige Ausgestaltungen ergeben sich aus den Unteransprüchen.

Aufgrund der elastischen Eigenschaften der Spannplatte kann sich die Spannfläche der Spannbacke der Werkstückoberfläche anpassen, so dass eine Flächenberührung erreicht wird, obwohl die Spannkraft von der Spannbacke nur längs einer Linie auf das Spannelement übertragen wird. Ein wesentlicher Vorteil ist darin zu sehen, dass die selbe Spannbacke für Werkstücke unterschiedlicher Krümmung, also für zylindrische Werkstücke unterschiedlichen Durchmessers verwendet werden kann, da sich die Spannplatte verschiedenen Werkstückoberflächen anpassen kann.

Die Übertragung der Spannkraft auf die Spannplatte kann durch wenigstens einen Steg erfolgen, der bei einem z.B. runden Werkstück parallel zur Krümmungsachse der Werkstückoberfläche verläuft. Bei konkaven Werkstücken kann ein einziger Steg genügen, der in der Mitte der Spannplatte angreift, so dass sich die Spannplatte von dieser Mitte ausgehend der Form des konkaven Werkstückes anpasst.

Bei konvexen Werkstücken sind zweckmässigerweise zwei Stege vorgesehen, die seitlich im Bereich der Enden der Spannplatte angreifen.

Die Spannplatte und die Stege können mit der Spannbacke einstückig ausgebildet, also aus dem Material der Spannbacke herausgearbeitet sein.

Es ist auch möglich, die Spannkraft durch Bolzen auf die Spannbacke zu übertragen, die parallel zur Krümmungsachse der Werkstückoberfläche verlaufen und zweckmässigerweise teilweise in die Spannbacke eingebettet sind. In diesem Falle kann zwischen der Spannbacke und der Spannplatte eine Schaumstoffeinlage vorgesehen sein, die an der Spannbacke und der Spannplatte durch Kleben befestigt ist und damit die Spannplatte trägt.

Die Erfindung wird nachstehend anhand der Fig. 1 bis 4 beispielsweise erläutert. Es zeigt:

Fig. 1 und 3 Spannbacken für Werkstücke mit konvexer Spannfläche und

Fig. 2 und 4 Spannbacken für Werkstücke mit konkaver Aufspannfläche.

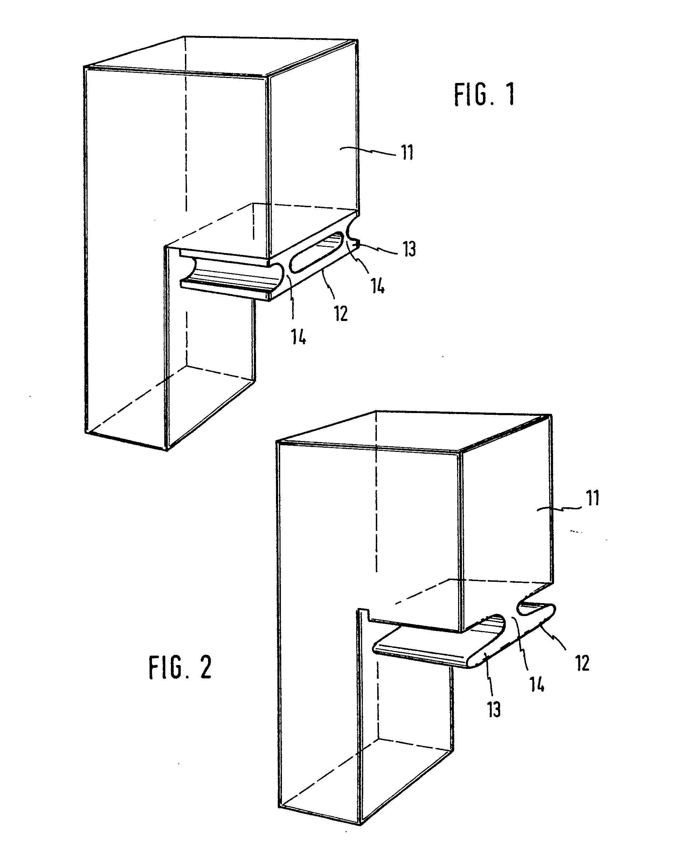

Fig. 1 zeigt schematisch eine Spannbacke, an der zum Spannen von Werkstücken mit konvexer Aufspannfläche ein Spannelement in Form einer Platte 13 befestigt ist, deren Unterseite als Spannfläche 12 dient. Die Spannplatte 13 ist durch zwei Stege 14 mit der Spannbacke 11 verbunden. Die Stege 14 und die Platte 13 sind mit der Backe 11 einstückig ausgebildet, d.h., dass die Stege und die Platte aus dem Material der Backe herausgearbeitet sind und ebenso wie diese aus Stahl bestehen.

Die Dicke der Spannplatte 13 ist so gewählt, dass sich die Spannfläche 12 der Backe 11 der Werkstückoberfläche anpasst. Die Stege 14 verlaufen auf einer Linie, die zur Krümmungsfläche des Werkstückes parallel ist, also zum Beispiel bei einem zylindrischen Werkstück parallel zu dessen Mantellinien. Beim Spannen eines derartigen zylindrischen Werkstückes mittels eines üblichen Dreibackenfutters, dessen Backen entsprechend Fig. 1 ausgebildet sind, passt sich die Spannplatte 13 zwischen den Stegen 14 der Werkstückform an, so dass sich eine Flächenberührung ergibt, und Markierungen an dem fertigbearbeiteten Werkstück vermieden werden. Da die Spannplatte 13 aus einem relativ harten Material besteht, ist es möglich, ausreichend hohe Spannkräfte zu übertragen.

Fig. 2 zeigt eine Spannbacke zum Spannen von Werkstücken konkaver Aufspannfläche. In diesem Falle ist nur ein Steg 14 in etwa in der Mitte der Spannplatte vorhanden, so dass sich die Spannplatte vor allem zu den seitlichen Enden hin der Werkzeugform anpasst.

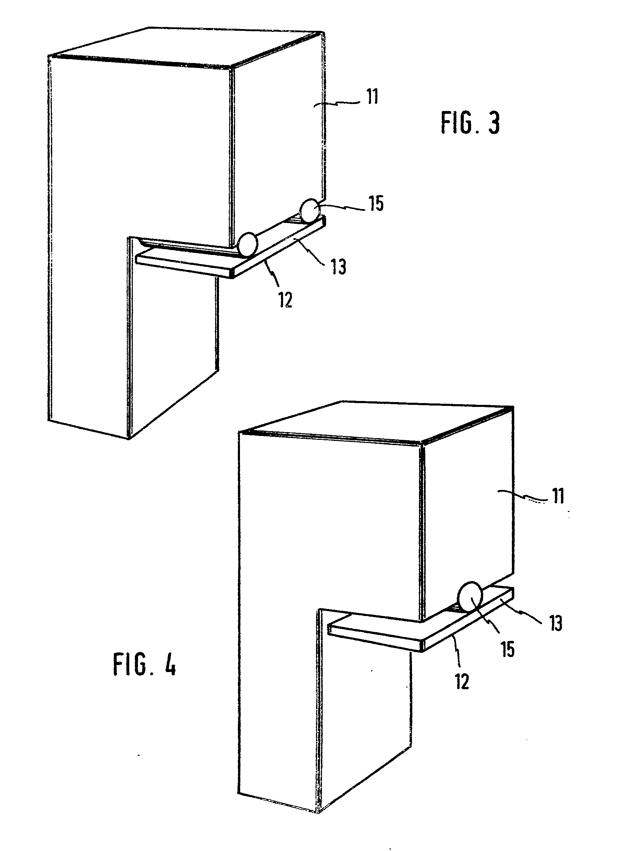

Die Fig. 3 und 4 zeigen Ausführungsformen, bei denen die Spannkraft durch Bolzen 15 auf die Spannplatte 13 übertragen wird. Diese Bolzen, die parallel zur Krümmungsachse der Werkstückoberfläche verlaufen, können teilweise in die Spannbacke eingebettet und durch Kleben befestigt sein.

**Patentansprüche**

1. Spannbacke für Aufspannvorrichtungen, insbesondere Mehrbacken-Spannfutter z.B. für Werkzeugmaschinen zum Aufspannen von Werkstücken mit nur in einer Richtung gekrümmter Oberfläche, insbesondere von Werkstücken mit runden Aufspannflächen, bei der die Spannfläche aus einem Spannelement aus einem sich unter der Wirkung der Spannkraft eines zu spannenden Werkstücks anpassenden biegsamen Material besteht, dadurch gekennzeichnet, dass die Spannfläche (12) als Spannplatte (13) aus einem harten, aber biegsamen Material mit elastischen Eigenschaften wie Stahl besteht, und dass zwischen der Spannplatte (13) und der Spannbacke (11) wenigstens ein zur Krümmungsachse der Werkstückoberfläche paralleler Steg (14) angeordnet ist.

2. Spannbacke nach Anspruch 1, dadurch gekennzeichnet, dass das Spannelement (13) aus einer Spannplatte besteht, die in Krümmungsrichtung der Werkstückoberfläche verformbar ist.

3. Spannbacke nach Anspruch 2, dadurch gekennzeichnet, dass zwischen der Spannplatte (13) und der Spannbacke (11) wenigstens ein zur Krümmungsachse der Werkstückoberfläche paralleler Steg (14) angeordnet ist.

4. Spannbacke nach Anspruch 3, dadurch gekennzeichnet, dass die Spannplatte (13) und der Steg (14) mit der Spannbacke (11) einstückig ausgebildet sind.

5. Spannbacke nach Anspruch 3, dadurch gekennzeichnet, dass der Steg (14) aus einem teilweise in die Spannbacke (11) eingebetteten Bolzen (15) besteht.

6. Spannbacke nach Anspruch 5, dadurch gekennzeichnet, dass der Bolzen (15) zylindrisch ist.

7. Spannbacke nach einem der Ansprüche 5 oder 6, dadurch gekennzeichnet, dass der Bolzen (15) durch Kleben befestigt ist.

8. Spannbacke nach einem der Ansprüche 1 bis 7, dadurch gekennzeichnet, dass die Spannplatte (13) aus Stahl besteht.

9. Spannbacke nach Anspruch 3, dadurch gekennzeichnet, dass zwischen der Spannbacke und dem Spannelement eine Schaumstoffeinlage angeordnet ist.

10. Spannbacke nach Anspruch 9, dadurch gekennzeichnet, dass die Schaumstoffeinlage an der Spannbacke und dem Spannelement durch Kleben befestigt ist.

## Revendications

1. Mors pour mandrins, en particulier pour mandrins à plusieurs mors, utilisés, par exemple, sur des machines-outils, destiné à serrer des pièces à usiner ayant une surface courbée dans un seul sens, en particulier des pièces à usiner ayant une surface de serrage ronde, la face de serrage de ce mors étant constituée d'un élément de serrage réalisé en une matière flexible, s'adaptant, sous l'action de la force de serrage, à la pièce à serrer, caractérisé par le fait que la face (12) de serrage est réalisée sous forme d'une plaquette (13) de serrage faite en une matière dure mais flexible ayant des propriétés élastiques, telle que l'acier, et par le fait qu'au moins une entretoise (14) parallèle à l'axe de courbure de la surface de la pièce à usiner est disposée entre la plaquette (13) de serrage et le mors (11).

2. Mors selon la revendication 1, caractérisé par le fait que l'élément (13) de serrage est composé d'une plaquette de serrage déformable dans le sens de la courbure de la surface de la pièce à usiner.

3. Mors selon la revendication 2, caractérisé par le fait qu'au moins une entretoise (14) parallèle à l'axe de courbure de la surface de la pièce à usiner est disposée entre la plaquette (13) de serrage et le mors (11).

4. Mors selon la revendication 3, caractérisé par le fait que la plaque (13) de serrage et l'entretoise (14) forment une seule pièce avec le mors (11).

5. Mors selon la revendication 3, caractérisé par le fait que l'entretoise (14) est constituée d'un axe (15) partiellement noyé dans le mors (11).

6. Mors selon la revendication 5, caractérisé par le fait que l'axe (15) est de forme cylindrique.

7. Mors selon l'une des revendications 5 ou 6, caractérisé par le fait que l'axe (15) est fixé par collage.

8. Mors selon l'une des revendications 2 à 7, caractérisé par le fait que la plaquette (13) de serrage est réalisée en acier.

9. Mors selon la revendication 3, caractérisé par le fait qu'une garniture en mousse est disposée entre le mors (11) et l'élément de serrage.

10. Mors selon la revendication 9, caractérisé par le fait que la garniture en mousse est fixée sur le mors (11) et sur l'élément de serrage par collage.

## Claims

1. Jaw for clamping devices, especially multi-jawed chucks, for example for machine tools, for the clamping of workpieces with surfaces curved in one direction only, especially workpieces with curved clamping faces, in which the clamping face comprises a clamping element of a pliable material which adapts itself under the action of the clamping force of a workpiece to be clamped, characterised in that the clamping face (12), as the clamping plate (13), consists of a hard but bendable material with elastic properties such as steel, and that at least one web (14) parallel to the axis of curvature of the workpiece surface is arranged between the clamping plate (13) and the jaw (11).

2. Jaw according to claim 1, characterised in that the clamping element (13) comprises a clamping plate which is deformable in the direction of curvature of the workpiece surface.

3. Jaw according to claim 2, characterised in that at least one web (14) parallel to the axis of curvature of the workpiece surface is arranged between the clamping plate (13) and the jaw (11).

4. Jaw according to claim 3, characterised in that the clamping plate (13) and the web (14) are formed integrally with the jaw (11).

5. Jaw according to claim 3, characterised in that the web (14) comprises a bolt (15) partly embedded in the jaw (11).

6. Jaw according to claim 5, characterised in that the bolt (15) is cylindrical.

7. Jaw according to either of claims 5 and 6, characterised in that the bolt (15) is secured by adhesive.

8. Jaw according to any of claims 2 to 7, characterised in that the clamping plate (13) comprises steel.

9. Jaw according to claim 3, characterised in that a lining of foam material is arranged between the jaw and the clamping element.

10. Jaw according to claim 9, characterised in that the foam material lining is secured on the jaw and the clamping element by adhesive.

1|2

FIG. 1

FIG. 2

2/2

FIG. 3

FIG. 4